(19) Europäisches Patentamt
European Patent Office
Office européen des brevets

(11) **EP 3 182 636 B1**

(12) **EUROPEAN PATENT SPECIFICATION**

(45) Date of publication and mention
of the grant of the patent:
**25.03.2020 Bulletin 2020/13**

(51) Int Cl.:
*H04B 3/32* (2006.01)       *H04L 1/16* (2006.01)
*H04L 5/14* (2006.01)

(21) Application number: **15307041.2**

(22) Date of filing: **17.12.2015**

(54) **APPARATUS AND METHOD FOR CONTROLLING TDD COMMUNICATIONS**

VORRICHTUNG UND VERFAHREN ZUR STEUERUNG VON TDD-KOMMUNIKATIONEN

APPAREIL ET PROCÉDÉ DE COMMANDE DE COMMUNICATIONS TDD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2017 Bulletin 2017/25**

(73) Proprietor: **Alcatel Lucent
91620 Nozay (FR)**

(72) Inventors:
• **TSIAFLAKIS, Paschalis
2018 Antwerpen (BE)**
• **MAES, Jochen
2018 Antwerpen (BE)**

(74) Representative: **Nokia EPO representatives
Nokia Technologies Oy
Karakaari 7
02610 Espoo (FI)**

(56) References cited:
**EP-A1- 2 852 068       EP-A2- 2 661 009
WO-A1-2014/039004       US-A1- 2013 272 177**

## Description

## Technical Field of the invention

The present invention relates to dynamic resource allocation within a wired communication system making use of Time-Division Duplexing (TDD).

## Technical Background of the Invention

G.fast is a transmission technology that enables highspeed broadband access over the existing telephony copper line infrastructure between a remote fiber-fed network node and multiple end-users. On each individual line data rates of up to 1 Gbps can be achieved, depending on the length and condition of the copper line.

G.fast employs TDD to duplex downstream and upstream communications. Each TDD frame consists of a separate downstream and upstream time interval common across all the subscriber lines of one or more given nodes. The respective lengths of the downstream and upstream intervals are controlled via the so-called DS/US ratio parameter, which has a common value across all the lines. So far a change in DS/US ratio requires full reinitialization of the involved lines, and hence a service disruption for the end users. The DS/US ratio will therefore be static for at least a few days, if not years.

Each downstream and upstream interval on its own is further divided into a Normal Operation Interval (NOI) during which all lines transmit data, and a Discontinuous Operation Interval (DOI) during which only a subset of the lines transmit data, while the remaining lines are discontinued. Discontinuing lines has the advantage that the Analog Front-End (AFE) of the corresponding lines can be switched off, thereby substantially reducing the power consumption of the system and its ecological footprint. However discontinuing lines also means that allocated data rates are reduced and that additional latency is present for waking up the AFE and resuming normal operation, resulting in a trade-off between power consumption and Quality of Service (QoS).

The following background art, which may be regarded as useful for understanding the present invention and its relationship to the prior art, is further acknowledged and briefly discussed.

The International patent application entitled *"Bandwidth Assignment for Multi-Line TDD Systems"* filed on September 10, 2013, and published on March 13, 2014 with publication number WO 2014/039004 A1, discloses a transceiver node and method for enabling dynamic bandwidth assignment in bi-directional TDD multicarrier communication over wire lines. The transceiver node is operable to be coupled to a plurality of loops, where each loop is terminated by a respective network terminal, NT. The method comprises collecting traffic reports from local and remote queues associated with uplink and downlink traffic on the plurality of loops, and determining an actual demand for upstream and downstream bandwidth, respectively, for each of the plurality of loops, based on the collected traffic reports. The method further comprises deriving an US/DS frame partitioning based on the determined actual demand for upstream and downstream bandwidth, and providing an indication of the derived US/DS frame partitioning to the NTs. NTs are then scheduled in accordance with the derived partitioning.

The US patent application entitled *"Dynamic Frame Structure for Synchronous Time-Division Duplexing Digital Subscriber Lines"* filed on April 12, 2013, and published on October 17, 2013 with publication number US 2013/0272177 A1, discloses an access node for DSL communication comprising a transceiver coupled to a subscriber line, and a control entity coupled to the transceiver. The control entity is configured to receive a request to switch to a nominal asymmetry ratio between an upstream data rate and a downstream data rate after initialization of the subscriber line, to determine a flexible time period value based on the nominal asymmetry ratio, wherein the flexible time period is used to define a TDD frame structure, and forward a message that comprises the flexible time period value to the transceiver, wherein the transceiver is configured to transmit an upstream transmission using the TDD frame structure over the subscriber line, and receive a downstream transmission using the TDD frame structure over the subscriber line.

## Summary of the Invention

It is an object of the present invention to leverage on this new TDD frame structure, and further to improve communication throughputs as experienced by end users over such TDD-based communication systems.

The present invention is defined and limited by the scope of the appended claims. In the following, embodiments not falling within the scope of the appended claims are to be interpreted as examples useful for understanding the present invention.

In accordance with a first aspect of the invention, a communication controller is proposed for controlling TDD communications over a plurality of subscriber lines making use of a common TDD frame structure. The common TDD frame structure comprises a total number N of transmission slots per TDD frame, a first number $N_{DS}$ of which are configured for downstream communications over the subscriber lines and a second number Nus of which are configured for upstream communications over the subscriber lines. The communication controller is configured to receive traffic measurements performed over the respective subscriber lines, and to determine a first target number $N_{DS,TAR}$ of downstream transmission slots per TDD frame and a second target number $N_{US,TAR}$ of upstream transmission slots per TDD frame to be sustained over the subscriber lines during one or more TDD frames based on the traffic measurements. The communication controller is further configured, if a difference or a weighted difference between a downstream margin $N_{DS} - N_{DS,TAR}$ and an upstream margin $N_{US} - N_{US,TAR}$ is greater than a given threshold, to adjust the first number $N_{DS}$ and the second number $N_{US}$ such that the difference or weighted difference between the downstream and upstream margins is reduced.

In one embodiment of the invention, the traffic measurements comprise measured numbers of downstream and upstream transmission slots per TDD frame previously used over the respective subscriber lines

In one embodiment of the invention, the communication controller is further configured to determine respective maximum or time-averaged measured numbers of downstream and upstream transmission slots per TDD frame previously used over the respective subscriber lines, and to derive the first and second target numbers $N_{DS,TAR}$ and $N_{US,TAR}$ as absolute maximum value or averaged value across the subscriber lines of the so-determined maximum or time-averaged measured numbers.

In another embodiment, the traffic measurements comprise measured characteristics of respective downstream and upstream transmit queues configured to buffer downstream and upstream data units pending for transmission over the respective subscriber lines.

In one embodiment of the invention, the measured characteristics comprise at least one of the following:

- measured lengths of the respective downstream and upstream transmit queues;
- measured ingress rates for the respective downstream and upstream transmit queues; and
- measured egress rates for the respective downstream and upstream transmit queues.

In one embodiment of the invention, the communication controller is further configured to determine respective required numbers of downstream and upstream transmission slots per TDD frame necessary for draining the downstream and upstream transmit queues over the respective subscriber lines during a given period, and to derive the first and second target numbers $N_{DS,TAR}$ and $N_{US,TAR}$ as absolute maximum value or averaged value across the subscriber lines of the so-determined required numbers.

In one embodiment of the invention, the communication controller is further configured, if both the downstream and upstream margins are equal to zero, to adjust the first number $N_{DS}$ and the second number $N_{US}$ to a first default number $N_{DS,DEF}$ and a second default number $N_{US,DEF}$ respectively.

In one embodiment of the invention, the communication controller is further configured to repeatedly iterate through the steps of receiving, determining and adjusting, for instance once every few TDD frames or superframes.

In one embodiment of the invention, the first number $N_{DS}$ and the second number $N_{US}$ are enforced synchronously over the subscriber lines during showtime operation.

Such a communication controller may form part of an access node providing broadband communication services to subscribers, such as a Distribution Point Unit (DPU), or may form part of a network manager (or alike) for operating, controlling and managing access nodes.

In accordance with another aspect of the invention, a method is proposed for controlling TDD communications over a plurality of subscriber lines making use of a common TDD frame structure. The common TDD frame structure comprises a total number N of transmission slots per TDD frame, a first number $N_{DS}$ of which are configured for downstream communications over the subscriber lines and a second number $N_{US}$ of which are configured for upstream communications over the subscriber lines. The method comprises receiving traffic measurements performed over the respective subscriber lines, and determining a first target number $N_{DS,TAR}$ of downstream transmission slots per TDD frame and a second target number $N_{US,TAR}$ of upstream transmission slots per TDD frame to be sustained over the subscriber lines during one or more TDD frames based on the traffic measurements. The method further comprises, if a difference or a weighted difference between a downstream margin $N_{DS} - N_{DS,TAR}$ and an upstream margin $N_{US} - N_{US,TAR}$ is greater than a given threshold, adjusting the first number $N_{DS}$ and the second number $N_{US}$ such that the difference or weighted difference between the downstream and upstream margins is reduced.

Embodiments of a method according to the invention correspond with the embodiments of a communication controller according to the invention.

The present invention proposes to dynamically adapt the DS/US ratio based on short-term traffic-driven estimations or predictions so that the downstream and upstream margins are both maximized for the temporarily most active users. In addition, a steering towards an operator configured default DS/US ratio is proposed in case simultaneous large upload and download traffic loads.

The sharing of upstream and downstream resources is a resource allocation setting unique to G.fast so far. By dynamically adjusting the DS/US ratio across all the involved lines, the lines can be assigned more downstream or upstream bandwidth on demand, resulting in a higher Quality of Experience (QoE) for the end users. For instance, an ad-hoc DS/US ratio can cope with a transient traffic burst over a particular line in a given direction provided the other users have a temporary low-traffic load in the opposite direction. In case of blocking, then a default DS/US ratio can be targeted to ensure that performance is at least as good as the operator-configured ratio.

The present invention requires a dynamic, seamless and joint adaptation of the DS/US ratio over all the involved lines during showtime operation. This is achieved by sending the updated DS/US ratio value to all applicable transceivers, and by enforcing this new DS/US ratio value synchronously over all subscriber lines from a particular TDD frame or superframe index onwards.

An exemplary use case of the proposed DS/US ratio adaptation scheme is a speed test, whereby a subscriber measures both the downstream and upstream data throughputs that are achievable over his subscriber loop. A fast dynamic adjustment scheme could potentially allocate full aggregate bandwidth to downstream communications when downloading the test packets from the speed test server, and next to upstream communications when uploading the test packets to the speed test server.

Another exemplary use case is that, during large parts of the night, the user traffic can be quite asymmetric. A traffic adaptation of the DS/US ratio could automatically detect this and react with temporarily allocating more bandwidth in downstream or upstream depending on the instantaneous needs.

## Brief Description of the Drawings

The above and other objects and features of the invention will become more apparent and the invention itself will be best understood by referring to the following description of an embodiment taken in conjunction with the accompanying drawings wherein:

- fig. 1 represents an overview of an access plant;
- fig. 2 represents the standardized TDD frame structure employed in G.fast;
- fig. 3 represents further details of a DPU as per the present invention;
- fig. 4A and 4B represents two exemplary traffic situations and related DS/US ratio adaptation as per the present invention;
- fig. 5 represents a time line of the measurement periods and measurement reports; and
- fig. 6 represents a message flow chart between a DPU and Customer Premises Equipment (CPE) for on-line update of the DS/US ratio.

## Detailed Description of the Invention

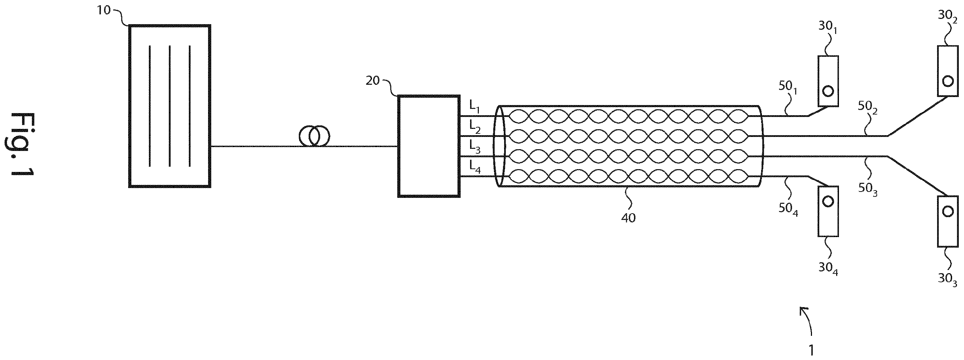

There is seen in fig. 1 an access plant 1 comprising a network unit 10 at a C0, a DPU 20 coupled via one or more optical fibers to the network unit 10, and further coupled via a copper plant to CPEs 30 at various subscriber locations. The transmission media of the copper plant is typically composed of copper unshielded Twisted Pairs (UTP).

As an illustrative example, the copper plant comprises four copper pairs $L_1$ to $L_4$ sharing a common access segment 40, and then going through dedicated loop segments 50 for final connection to CPEs $30_1$ to $30_4$ respectively.

The DPU 20 sets up and operates bi-directional communication channels over the copper pairs $L_1$ to $L_4$ according to G.fast communication technology.

Downstream communications (DS) refer to communications from the DPU 20 towards the respective CPEs 30, while upstream communications (US) refer to communications from the respective CPEs 30 towards the DPU 20.

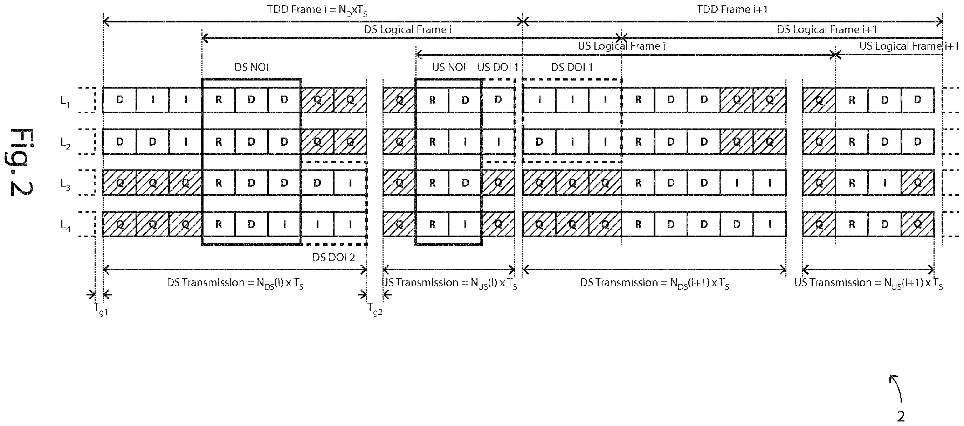

There is seen in fig. 2 an overview of the TDD frame structure 2 used for G.fast bi-directional communications over the four subscriber lines $L_1$ to $L_4$.

The successive upstream and downstream Discrete Multi-Tone (DMT) symbols are plotted for each and every subscriber line. Each DMT symbol is synthesized from 2K time samples (IFFT samples) that have been cyclically extended, K denoting the total number of tones. The time period of a cyclically-extended DMT symbol is denoted as $T_S$.

The successive DMT symbols are grouped into TDD frames. Presently, two consecutive TDD frames with frame index i and i+1 have been plotted in fig. 2.

The DMT symbols are denoted with a capital letter according to their type. R stands for Robust Management Channel (RMC) symbols, D for DATA symbols, I for IDLE symbols, and Q for QUIET symbols.

The RMC symbols are used for robust and fast adaptation of the framing parameters. The downstream RMC symbols always occupy a particular symbol position within the TDD frame, defined by means of a particular offset from the beginning of the TDD frame; and so does the upstream RMC symbols by means of another offset.

The DATA symbols are sent whenever there is traffic payload to send to the peer transceiver.

The IDLE symbols do not carry any payload traffic, but carry the pre-compensation signals that are necessary for vectoring operation. The receive analog front-end can be switched off during IDLE symbols.

Last, the QUIET symbols are zero-power symbols during which both the transmit and receive analog front-end can be switched off.

The downstream and upstream DMT symbols use the same set of tones, but during non-overlapping transmission intervals (TDD operation). Each TDD frame is thus divided into a downstream transmission interval comprising $N_{DS}$ downstream transmission slots for insertion of downstream DMT symbols, and an upstream transmission interval comprising $N_{US}$ upstream transmission slots for insertion of upstream DMT symbols.

Downstream transmissions are such that the downstream DMT symbols transmitted by the DPU 20 over the respective subscriber lines $L_1$ to $L_4$ are time-aligned at DMT symbol level, at TDD frame level and at superframe level (structure not shown in fig. 2) at the so-called transmit U-interface of the DPU 20. Similarly, upstream transmissions are such that the upstream DMT symbols transmitted by the respective CPEs $30_1$ to $30_4$ over the subscriber lines $L_1$ to $L_4$ are received at the receive u-interface of the DPU 20 aligned in time at DMT symbol level, at TDD frame level and at superframe level. This is achieved by sending appropriate timing information to the respective CPEs $30_1$ to $30_4$ according to their respective loop lengths for time-alignment across the subscriber lines $L_1$ to $L_4$ of the received upstream DMT symbols at the access node.

At the U-interface of the DPU, the downstream and upstream transmission intervals are separated by two guard time intervals of duration $T_{g1}$ and $T_{g2}$ respectively. The timing information sent to the respective CPEs $30_1$ to $30_4$ are such that $T_{g1} + T_{g2}$ is equal to one DMT symbol period. Every TDD frame thus spans over $N_D = N_{DS} + N_{US} + 1$ DMT symbol periods, and thus lasts $T_D = N_D \times T_S$, and there are $N = N_D - 1 = N_{DS} + N_{US}$ transmission opportunities per TDD frame.

A logical frame structure is super-imposed over the TDD frame structure. The downstream logical frames always start from a downstream RMC symbol position, and encompass all downstream DMT symbol positions up to and including the downstream DMT symbol position preceding the next downstream RMC symbol position, and thus each downstream logical frame comprises $N_{DS}$ downstream transmission slots. The upstream logical frames always start from an upstream RMC symbol position, and encompass all upstream DMT symbol positions up to and including the upstream DMT symbol position preceding the next upstream RMC symbol position, and thus each upstream logical frame comprises Nus upstream transmission slots.

Within each logical frame, a contiguous transmission interval is dynamically provisioned for normal operation (NOI), while the remainder of the logical frame is reserved for discontinued operation (DOI). The length and offset of the NOI interval are the same for all subscriber lines, while the length and offset of the DOI can be tailored per subscriber line, thereby allowing different DOI groups (e.g., to ease vectoring operation). The lengths and respective offsets of the NOI and DOI intervals are constantly adjusted through the RMC channels depending on the traffic demand.

For instance, as an illustrative example, a downstream NOI interval DSNOI comprising 3 downstream transmission slots and an upstream NOI interval USNOI comprising 2 upstream transmission slots have been configured for all the lines $L_1$ to $L_4$. Then a first downstream DOI interval DSDOI1 comprising 3 downstream transmission slots has been configured for the lines $L_1$ and $L_2$, and a second non-overlapping downstream DOI interval DSDOI2 comprising 2 downstream transmission slots has been configured for the lines $L_3$ and $L_4$. Also, a first upstream DOI interval USDOI1 has been configured for the lines $L_1$ and $L_2$, and no upstream DOI interval has been configured for the lines $L_3$ and $L_4$.

Consequently, the subscriber lines $L_1$ and $L_2$ are assigned 3+3=6 downstream transmission opportunities and 2+1=3 upstream transmission opportunities during that logical frame, and the subscriber lines $L_3$ and $L_4$ are assigned 3+2=5 downstream transmission opportunities and 2+0=2 upstream transmission opportunities during that same logical frame.

The subscriber lines are only allowed to transmit DATA symbols, or IDLE symbols if there is no traffic to be sent, during their configured NOI and DOI intervals. Outside these intervals, the subscriber lines can only send IDLE or QUIET symbols, and preferably the latter for power saving.

Now, if the DS/US ratio is changed on-line during showtime, the numbers $N_{DS}$ and $N_{US}$ of downstream and upstream transmission slots per TDD frame are adapted accordingly, and so is the TDD frame structure from a given TDD frame or superframe index. The offsets of the downstream and upstream RMC symbols may be changed as a consequence of the DS/US ratio adaptation, in which case a logical frames may temporarily include a few more or a few less transmission opportunities in each direction. The NOI and DOI transmission intervals may be adapted too taking into consideration the new TDD frame structure.

Hence, and although such a provision is not foreseen by the current G.fast standard, an on-line reconfiguration of the DS/US ratio through the RMC channel does not pose any insurmountable technical challenge, at least with a fixed TDD frame size $N_D$, and can be easily implemented by extending the existing RMC primitives to now include $N_{DS}$ and $N_{US}$ communication parameters.

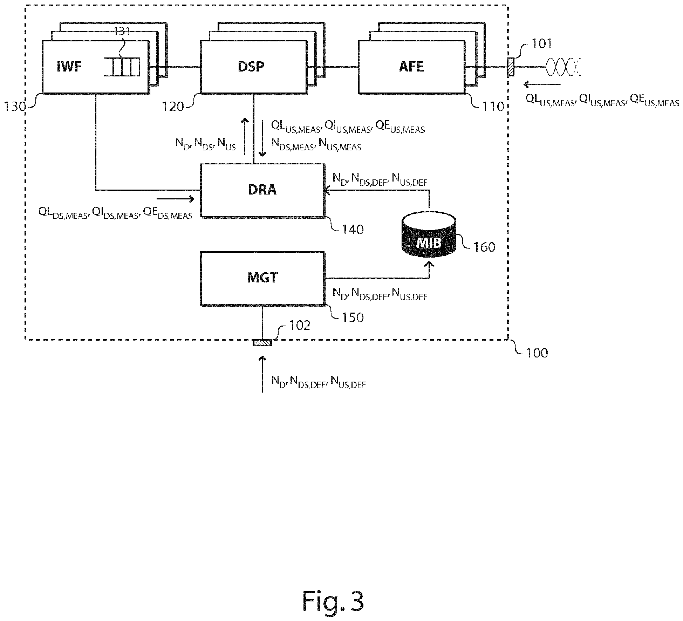

There is seen in fig. 3 further details about a DPU 100 as per the present invention.

The DPU 100 comprises:

- AFEs 110;

- Digital Signal Processors (DSP) 120;
- one or more Inter-working Functions (IWF) 130;
- a communication controller 140 for Dynamic Resource Allocation (DRA);
- a management agent (MGT) 150; and
- a Management Information Base (MIB) 160.

The DPU 100 further includes a vectoring processor and a vectoring controller (not shown) for vectoring operation over the subscriber lines.

The DSPs 120 are coupled to respective AFEs 110, and to respective inter-working functions 130. The AFE 110 is further coupled through respective line termination ports 101 to subscriber lines, and further to remote CPEs.

The DSPs 120 and the inter-working functions 130 are coupled to the communication controller 140. The communication controller is further coupled to the MIB 160. The management agent 150 is coupled to the MIB 160 and through a communication port 102 to a Packet Data Network (PDN), and further to a network manager or alike.

The AFEs 110 individually comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the subscriber line, and a Low Noise Amplifier (LNA) for amplifying the receive signal with as little noise as possible.

With TDD operation, no hybrid is required as the transmitter and receiver operate in alternate mode: the receive circuitry is switched OFF (or the receive signal is discarded) while the transmit circuitry is active, and the way around, the transmit circuitry is switched OFF while the receive circuitry is active.

The individual AFEs 110 further comprise impedance-matching circuitry for adapting to the characteristic impedance of the transmission medium, clipping circuitry for clipping any voltage or current surge occurring over the subscriber lines, and isolation circuitry (typically a transformer) for DC-isolating the transceiver from the transmission medium.

The DSPs 120 are for encoding and modulating user and control traffic into downstream DMT symbols, and for demodulating and decoding user and control data from upstream DMT symbols.

The following transmit steps are typically performed within the DSPs 120:

- data encoding, such as data multiplexing, framing, scrambling, error correction encoding and interleaving;
- signal modulation, comprising the steps of ordering the tones according to a tone ordering table, parsing the encoded bit stream according to the respective bit loadings of the ordered tones, and mapping each chunk of bits onto an appropriate transmit constellation point (with respective carrier amplitude and phase), possibly with Trellis coding;
- signal scaling, such as power normalization, transmit PSD shaping and transmit gain scaling;
- Inverse Fast Fourier Transform (IFFT);
- Cyclic Prefix (CP) insertion; and
- time-windowing.

The following receive steps are typically performed within the DSPs 120:

- time-windowing and CP removal;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective bit loading, detecting the expected transmit constellation point and the corresponding transmit bit sequence, possibly with Trellis decoding, and re-ordering all the detected chunks of bits according to the tone ordering table; and
- data decoding, such as data de-interleaving, error correction decoding, de-scrambling, frame delineation and demultiplexing.

Some of these transmit or receive steps can be omitted, or some additional steps can be present, depending on the exact digital communication technology being used.

The DSPs 120 are further configured to operate a Special Operation Channel (SOC) for initializing a G.fast bi-directional communication session over a subscriber line, an Embedded Operation Channel (EOC) for transporting diagnosis, management or On-Line Reconfiguration (OLR) commands and responses, and a RMC channel for fast adaptation of the framing parameters.

Presently, the DSPs 120 are further configured to seamlessly change the DS/US ratio during showtime operation, that is to say to send updated values for Nus and $N_{DS}$ communication parameters to the respective CPEs through the RMC channel or alike, and to enforce the new TDD frame structure from a given TDD frame or super frame index onwards.

The inter-working functions 130 are split into a downstream and an upstream inter-working functions.

The downstream inter-working function accommodates one or more transmit queues (or buffers) 131 for holding the downstream data packets pending for transmission over the subscriber lines. The downstream data packets are pushed into the respective transmit queues according to their priority. A scheduler then selects the next downstream data packet for transmission: this data packet is fed to the corresponding DSP for further encapsulation and transmission over the respective subscriber line. The downstream inter-working function further accommodates some downstream rate adaptation logic and flow control logic to conform to the DSP timing and to the capacity of the downstream link.

The upstream inter-working function is for fetching the received upstream data packets from the corresponding DSP, and for forwarding them towards their appropriate destination. The upstream inter-working functions also accommodates some upstream flow control logic to conform to the capacity of the upstream optical link by means of back-pressure signals that are propagated by the corresponding DSP downwards to the respective CPEs.

The communication controller 140 is for controlling the communication parameters used by the respective DSPs. Some of these communication parameters have an operator-configured value stored in the MIB 160 (e.g., the frequency band plan to be used, the transmit power mask, etc), while other communication parameters are autonomously determined by the communication controller 140, possibly within certain given lower and/or upper bounds (e.g., tone bit loading and fine gain tunning, NOI/DOI offset and length, etc). DRA falls into that last category.

Presently, the communication controller 140 is configured to provide the DSPs 120 with the TDD framing parameters, namely the total number $N_D$ of DMT symbols per TDD frame (inc. the guard times), as well as the numbers $N_{DS}$ and Nus of downstream and upstream transmission slots configured per TDD frame.

The communication controller 140 is further adapted to determine target numbers $N_{DS,TAR}$ and $N_{US,TAR}$ of downstream and upstream transmission slots per TDD frame to be sustained across the subscriber lines during one or more coming TDD frames based upon traffic measurements received from the DSPs 120 and/or the inter-working functions 130, and to dynamically adjust the numbers $N_{DS}$ and $N_{US}$ of downstream and upstream transmission slots per TDD frame based on this expected traffic load as it will be set forth further in the description. The so-adjusted numbers $N_{DS}$ and $N_{US}$ are passed to the DSPs 120 for synchronous enforcement over the subscriber lines during showtime operation.

Presently, the communication controller 140 is supplied with the following traffic measurements for adjustment of the numbers $N_{DS}$ and $N_{US}$:

- the numbers $N_{DS,MEAS}$ and $N_{US,MEAS}$ of downstream and upstream transmission slots per TDD or logical frame actually used (including both the RMC and DATA symbols) over the respective subscriber lines as measured by the respective DSPs 120 (PHY-based measurements hereinafter);
- the filling levels $QL_{DS,MEAS}$ for the respective downstream transmit queues 131 as measured by the respective inter-working functions 130;
- the ingress and egress rates $QI_{DS,MEAS}$ and $QE_{DS,MEAS}$ for the respective downstream transmit queue 131 as measured by the respective inter-working functions 130;
- the filling levels $QL_{US,MEAS}$ for the respective upstream transmit queues as measured by the respective CPEs; and
- the ingress and egress rates $QI_{US,MEAS}$ and $QE_{US,MEAS}$ for the respective upstream transmit queues as measured by the respective CPEs.

The operator typically configures default values for the numbers $N_{DS}$ and $N_{US}$ of downstream and upstream transmission slots per TDD frame. These default values are denoted as $N_{DS,DEF}$ and $N_{US,DEF}$ respectively.

The operator may also configure a minimum value for the numbers $N_{DS}$ and $N_{US}$ of downstream and upstream transmission slots per TDD frame, thereby implying a maximum value for these numbers too. These minimum values are denoted as $N_{DS,MIN}$ and $N_{US,MIN}$ respectively.

The management agent 150 is for carrying out management and maintenance commands received from a network manager, as well as for updating and maintaining the MIB 160 accordingly.

Presently, the management agent 150 controls the operator-configured values as held in the MIB 160 for the total number $N_D$ of DMT symbols per TDD frame, for the default numbers $N_{DS,DEF}$ and $N_{US,DEF}$ of downstream and upstream transmission slots per TDD frame, and for the minimum required numbers $N_{DS,MIN}$ and $N_{US,MIN}$ of downstream and upstream transmission slots per TDD frame. These operator-configured values are then read from the MIB 160 by the communication controller 140.

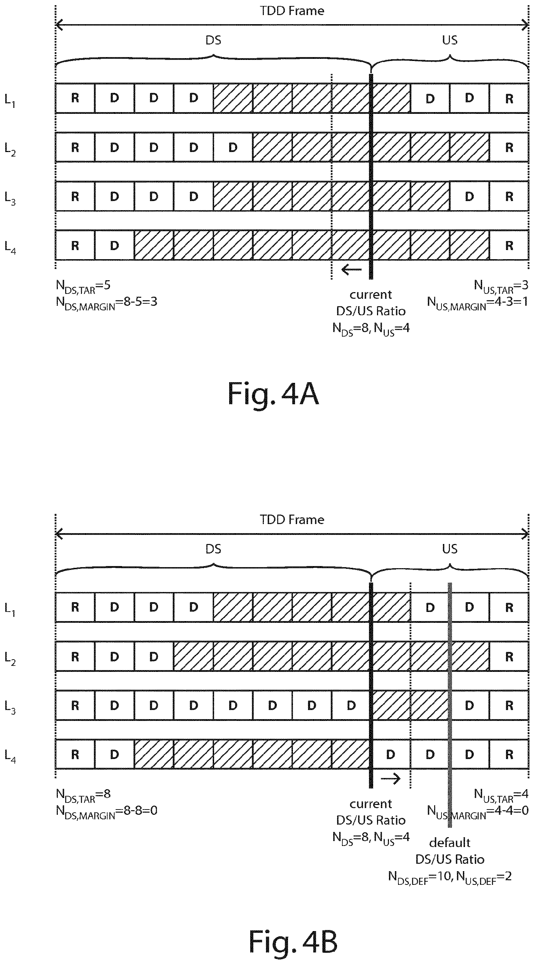

The adjustment of the numbers $N_{DS}$ and $N_{US}$ of downstream and upstream transmission slots per TDD frame will now be explained with regard to fig. 4A and 4B.

There is seen in fig. 4A a first exemplary traffic situation wherein the allowed numbers $N_{DS}$ and $N_{US}$ of downstream and upstream transmission slots per TDD frame is initially configured to 8 and 4 respectively, meaning the DS/US ratio is equal to 8/4=2.

The maximum numbers of downstream and upstream transmission slots per TDD frame actually used during a given measurement period are plotted for the respective subscriber lines $L_1$ to $L_4$. As one can see, the subscriber line $L_2$ has used the maximum number of downstream transmission slots, presently 5 downstream transmission slots (inc. the RMC symbol position which is always used) out of the 8 available ones, and the subscriber line $L_1$ has used the maximum number of upstream transmission slots, presently 3 upstream transmission slots (also inc. the RMC symbol position) out of the 4 available ones.

If the absolute maximum value across the subscriber lines $L_1$ to $L_4$ is chosen as the target value, then the target numbers $N_{DS,TAR}$ and $N_{US,TAR}$ of downstream and upstream transmission slots to be sustained across the subscriber lines $L_1$ to $L_4$ per TDD frame amount to 5 and 3 respectively, and the downstream and upstream margins $N_{DS,MARGIN}$ and $N_{US,MARGIN}$ amount to 8-5=3 and 4-3=1 respectively.

As a consequence, the numbers $N_{DS}$ and $N_{US}$ of downstream and upstream transmission slots per TDD frame is adjusted so as to re-equalize the downstream and upstream margins. Presently, the number $N_{DS}$ of downstream transmission slots per TDD frame is adjusted from 8 to 7, while the number $N_{US}$ of upstream transmission slots per TDD frame is adjusted from 4 to 5, meaning a new DS/US ratio equal to 7/4=1,4 (see dotted line in fig. 4A). Assuming the same traffic profile applies, this would yield 7-5=2 and 5-3=2 for the new downstream and upstream margins $N_{DS,MARGIN}$ and $N_{US,MARGIN}$ respectively.

Of course, the downstream and upstream margin are not necessarily fully re-equalized at once like in the example above, but instead can be gradually re-equalized, meaning that the difference between the downstream and the upstream margins $N_{DS,MARGIN}$ and $N_{US,MARGIN}$ is gradually driven towards zero by means of successive adjustments.

Also, if the downstream and upstream margins differ by one unit only, then one can leave the current DS/US ratio unchanged, or alternatively one can assign this single transmission slot to downstream and upstream directions alternatively.

Alternatively, one may use the averaged value across the lines $L_1$ to $L_4$ as the target value (instead of the absolute maximum value). If so, the target numbers $N_{DS,TAR}$ and $N_{US,TAR}$ of downstream and upstream transmission slots per TDD frame to be sustained across the subscriber lines $L_1$ to $L_4$ would amount to (4+5+4+2)/4=3,75 and (3+1+2+1)/4=1,75 respectively, and the downstream and upstream margins $N_{DS,MARGIN}$ and $N_{US,MARGIN}$ would amount to 8-3,75=4,25 and 4-1,75=2,25 respectively. Then an adjustment round would take place to re-equalize these downstream and upstream margins.

There is seen in fig. 4B another exemplary traffic situation, wherein the numbers $N_{DS}$ and $N_{US}$ of available downstream and upstream transmission slots per TDD frame are fully used in each direction, namely by the subscriber lines $L_3$ for downstream and $L_4$ for upstream. This situation is referred to as a blocking situation.

In this case, the numbers $N_{DS}$ and $N_{US}$ of downstream and upstream transmission slots per TDD frame can be steered towards their default values $N_{DS,DEF} = 10$ and $N_{US,DEF} = 2$ respectively (see gray line in fig. 4B). Presently the number $N_{DS}$ of downstream transmission slots per TDD frame is increased from 8 to 9, while the number $N_{US}$ of upstream transmission slots per TDD frame is decreased from 4 to 3.

If the blocking situation persists, then at the next adjustment, the number $N_{DS}$ of downstream transmission slots per TDD frame will be again increased from 9 to 10, and the number $N_{US}$ of upstream transmission slots per TDD frame will be again decreased from 3 to 2, thereby sticking to the operator-configured default values $N_{DS,DEF}$ and $N_{US,DEF}$.

If the blocking situation still persists, then there will not be any subsequent adjustment till the traffic load reduces and some downstream and upstream margins build up again.

Further details on the derivation of the communication parameters $N_{DS}$ and $N_{US}$ from the traffic measurements are now given.

Let us first define a measurement period as being the period during which measurements are being carried out over the respective subscriber lines and fetched for further adjustment of the communication parameters $N_{DS}$ and $N_{US}$. The measurement period typically spans an integer number $N_{MEAS}$ of TDD frame periods (or logical frame periods), and thus lasts $T_{MEAS} = N_{MEAS} \times T_D = N_{MEAS} \times N_D \times T_S$.

The measurement periods are indexed by means of an index k. Measured period 0 is further assumed to start concomitantly with TDD frame 0, and thus encompasses TDD frames 0 up to TDD frame $N_{MEAS} - 1$. More generally, measurement period k encompasses TDD frames $KN_{MEAS}$ up to TDD frame $KN_{MEAS} + N_{MEAS} - 1 = (k+1)N_{MEAS} - 1$. At the end of each measurement period, new measurement samples are available for a new estimation round.

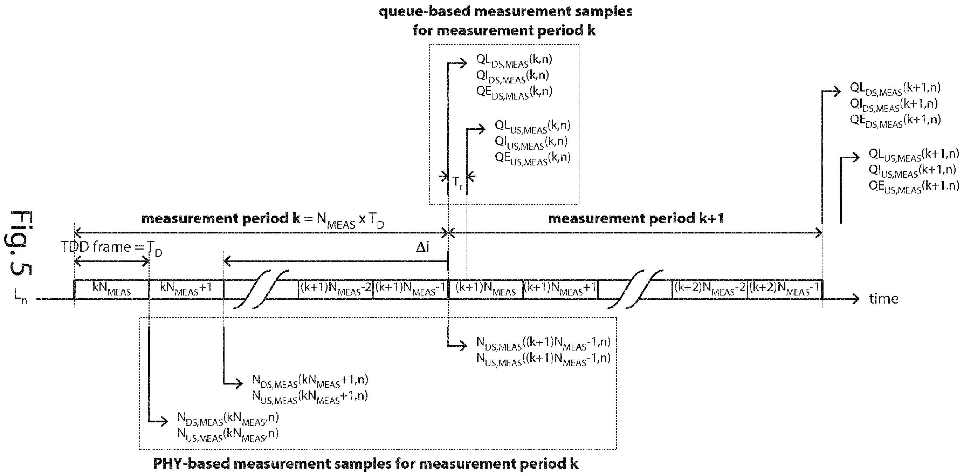

The measurement periods, as well as the parameters and timing of the various measurement reports, have been depicted in fig. 5 for both PHY-based and queue-based measurements. Tr herein denotes the reporting delay for the upstream queue measurements carried out by the respective CPEs.

For PHY-based measurements, the DSPs 120 report both the measured numbers $N_{DS,MEAS}(i,n)$ and $N_{US,MEAS}(i,n)$ of downstream and upstream transmission slots actually used over each subscriber line Ln during TDD frame i, n denoting the line or user index. The measurement period k thus encompasses $2N_{MEAS}$ so-measured numbers, namely from $N_{DS,MEAS}(kN_{MEAS},n)$ up to $N_{DS,MEAS}((k+1)N_{MEAS}-1,n)$ and $N_{US,MEAS}(kN_{MEAS},n)$ up to $N_{US,MEAS}((k+1)N_{MEAS}-1,n)$.

As a first option, one may compute the time-averaged numbers of downstream and upstream transmission slots per TDD frame used over the respective subscriber lines during measurement period k.

If the absolute maximum value across the subscriber lines is chosen as the target value, then the target numbers $N_{DS,TAR}(k+1)$ and $N_{US,TAR}(k+1)$ of downstream and upstream transmission slots per TDD frame to be sustained over the subscriber lines during measurement period k+1 can be computed as:

$$N_{DS,TAR}(k+1) = \max\left(N_{DS,MIN}, \left\lceil \max_n \frac{1}{\Delta i} \sum_{i=(k+1)N_{MEAS}-\Delta i}^{(k+1)N_{MEAS}-1} w_{DS}(i) N_{DS,MEAS}(i,n) \right\rceil\right), \text{ and}$$

$$N_{US,TAR}(k+1) = \max\left(N_{US,MIN}, \left\lceil \max_n \frac{1}{\Delta i} \sum_{i=(k+1)N_{MEAS}-\Delta i}^{(k+1)N_{MEAS}-1} w_{US}(i) N_{US,MEAS}(i,n) \right\rceil\right) (1),$$

wherein $\Delta i$ denotes the number of measurement samples taken into account for the weighted average, and $w_{DS}(i)$ and $w_{US}(i)$ denotes positive weight factors of the weighted average whose respective sums are equal to 1.

The parameter $\Delta i$ normally matches $N_{MEAS}$, yet it can have a lower value in order to e.g. discard the very first measurement samples that might be biased on account of the DS/US ratio adaptation. The weights $w_{DS}(i)$ and $w_{US}(i)$ can be used to e.g. give more precedence to the most recent traffic measurements.

If the average value across the subscriber lines is chosen as the target value, then eq. (1) are to be amended as:

$$N_{DS,TAR}(k+1) = \max\left(N_{DS,MIN}, \left\lceil \frac{1}{N_L}\sum_{n=1}^{N_L} \frac{1}{\Delta i} \sum_{i=(k+1)N_{MEAS}-\Delta i}^{(k+1)N_{MEAS}-1} w_{DS}(i) N_{DS,MEAS}(i,n) \right\rceil\right), \text{ and}$$

$$N_{US,TAR}(k+1) = \max\left(N_{US,MIN}, \left\lceil \frac{1}{N_L}\sum_{n=1}^{N_L} \frac{1}{\Delta i} \sum_{i=(k+1)N_{MEAS}-\Delta i}^{(k+1)N_{MEAS}-1} w_{US}(i) N_{US,MEAS}(i,n) \right\rceil\right) (2),$$

wherein $N_L$ denotes the total number of subscriber lines.

As a second option, one may compute the respective absolute maximum numbers of downstream and upstream transmission slots per TDD frame used over the respective subscriber lines during measurement period k, and compute the target numbers $N_{DS,TAR}(k+1)$ and $N_{US,TAR}(k+1)$ as:

$$N_{DS,TAR}(k+1) = \max\left(N_{DS,MIN}, \max_n \left( \max_{i \in \{(k+1)N_{MEAS}-\Delta i \ldots (k+1)N_{MEAS}-1\}} N_{DS,MEAS}(i,n) \right)\right), \text{ and}$$

$$N_{US,TAR}(k+1) = \max\left(N_{US,MIN}, \max_n \left( \max_{i \in \{(k+1)N_{MEAS}-\Delta i \ldots (k+1)N_{MEAS}-1\}} N_{US,MEAS}(i,n) \right)\right) (3),$$

or as:

$$N_{DS,TAR}(k+1) = \max\left(N_{DS,MIN}, \frac{1}{N_L}\sum_{n=1}^{N_L} \left( \max_{i \in \{(k+1)N_{MEAS}-\Delta i \ldots (k+1)N_{MEAS}-1\}} N_{DS,MEAS}(i,n) \right)\right), \text{ and}$$

$$N_{US,TAR}(k+1) = \max\left(N_{US,MIN}, \frac{1}{N_L}\sum_{n=1}^{N_L} \left( \max_{i \in \{(k+1)N_{MEAS}-\Delta i \ldots (k+1)N_{MEAS}-1\}} N_{US,MEAS}(i,n) \right)\right) (4).$$

Alternatively, one may consider a more general way of computing the value for the numbers $N_{DS,TAR}(k+1)$ and $N_{US,TAR}(k+1)$ as:

$$N_{DS,TAR}(k+1)=\max\left(N_{DS,MIN}, f_{DS}\left(f_{DS,n}\left(N_{DS,MEAS}(i,n), \forall i \in \{(k+1)N_{MEAS}-\Delta i \ldots (k+1)N_{MEAS}-1\}\right)\right)\right)$$

, and

$$N_{US,TAR}(k+1)=\max\left(N_{US,MIN}, f_{US}\left(f_{US,n}\left(N_{US,MEAS}(i,n), \forall i \in \{(k+1)N_{MEAS}-\Delta i \ldots (k+1)N_{MEAS}-1\}\right)\right)\right)$$

(5),

wherein $f_{DS,n}$ and $f_{US,n}$ are general mathematical functions determining the measured numbers of downstream and upstream transmission slots per TDD frame previously used over respective subscriber Ln, and $f_{DS}$ and $f_{US}$ are general mathematical functions across the subscriber lines of the so-determined downstream and upstream measured numbers.

Last, one could use a sliding measurement window that moves forward with a given step, yet still encompasses a part of the previous measurement window. If so, new measurement samples are available and substitute for older ones after each step forward, and the target numbers $N_{DS,TAR}(k+1)$ and $N_{US,TAR}(k+1)$ and corresponding margins are updated accordingly.

A first benefit of PHY-based measurements is that both downstream and upstream measurements are available at the DPU side, and that the CPEs are not involved and no upstream bandwidth is consumed for reporting the measurement samples. Another benefit is that the number of slots used by the PHY layer takes into account some PHY specific variations such as retransmission and variable overhead from the EOC.

For queue-based measurements, the interworking functions 130 report the measured filling levels $QL_{DS,MEAS}(k,n)$ (expressed in bits) of the downstream transmit queues 131 for the respective subscriber lines $L_n$ as observed at the end of measurement period k, as well as their measured ingress and egress rates $QI_{DS,MEAS}(k,n)$ and $QE_{DS,MEAS}(k,n)$ (expressed in bps) respectively defined as the total number of bits that were pushed into and pulled from the respective downstream transmit queues (not accounting for the discarded packets) during measurement period k divided by the measurement period $T_{MEAS}$. Similarly, the CPEs report the measured filling levels $QL_{US,MEAS}(k,n)$ of the upstream transmit queues for the respective subscriber lines $L_n$ as observed at the end of measurement period k, as well as their measured ingress and egress rates $QI_{US,MEAS}(k, n)$ and $QE_{US,MEAS}(k,n)$.

We then have the following relations:

$$\frac{QL_{DS,MEAS}(k,n)-QL_{DS,MEAS}(k-1,n)}{T_{MEAS}}=QI_{DS,MEAS}(k,n)-QE_{DS,MEAS}(k,n), \text{ and}$$

$$\frac{QL_{US,MEAS}(k,n)-QL_{US,MEAS}(k-1,n)}{T_{MEAS}}=QI_{US,MEAS}(k,n)-QE_{US,MEAS}(k,n) \quad (6),$$

meaning that the egress rate can be derived from two successive queue lengths and from the ingress rate, or the ingress rate can be derived from two successive queue lengths and from the egress rate.

If only the queue lengths are accounted for without regard to the traffic dynamics, then the target numbers $N_{DS,TAR}(k+1)$ and $N_{US,TAR}(k+1)$ of downstream and upstream transmission slots per TDD frame to be sustained over the subscriber lines during measurement period k+1 can be computed as:

$$N_{DS,TAR}(k+1)=\max\left(N_{DS,MIN}, \max_n\left[\min\left(N_{DS}(k), 1+\frac{QL_{DS,MEAS}(k,n)}{K_{DS}(n)N_{DS,DRAIN}}\right)\right]\right), \text{ and}$$

$$N_{US,TAR}(k+1)=\max\left(N_{US,MIN}, \max_n\left[\min\left(N_{US}(k), 1+\frac{QL_{US,MEAS}(k,n)}{K_{US}(n)N_{US,DRAIN}}\right)\right]\right) \quad (7),$$

or as:

$$N_{DS,TAR}(k+1) = max\left(N_{DS,MIN}, \frac{1}{N_L}\sum_{n=1}^{N_L}\left\lceil min\left(N_{DS}(k), 1+\frac{QL_{DS,MEAS}(k,n)}{K_{DS}(n)N_{DS,DRAIN}}\right)\right\rceil\right), \text{ and}$$

$$N_{US,TAR}(k+1) = max\left(N_{US,MIN}, \frac{1}{N_L}\sum_{n=1}^{N_L}\left\lceil min\left(N_{US}(k), 1+\frac{QL_{US,MEAS}(k,n)}{K_{US}(n)N_{US,DRAIN}}\right)\right\rceil\right) \quad (8).$$

wherein $K_{DS}(n)$ and $K_{US}(n)$ denote the number of payload bits conveyed per downstream and upstream DATA symbol over subscriber line Ln (assuming the same bit loadings apply during NOI and DOI operation), and NDS,DRAIN and Nus,DRAIN denote the number of TDD frames during which the estimated downstream and upstream traffic load is to be fully drained. $N_{DS,DRAIN}$ and $N_{US,DRAIN}$ typically match $N_{MEAS}$, but may temporarily have a lower value if one wants to drain the pending traffic more aggressively in a shorter period. The '1+...' in eq. (7) and (8) is to account for the additional RMC symbol position as the traffic pending in the upstream and downstream transmit queues is modulated over DATA symbols only.

If now the queue ingress rates during measurement period k are to be accounted for, then the target numbers $N_{DS,TAR}(k+1)$ and $N_{US,TAR}(k+1)$ can be computed as:

$$N_{DS,TAR}(k+1) = max\left(N_{DS,MIN}, \max_n\left\lceil min\left(N_{DS}(k), 1+\frac{QL_{DS,MEAS}(k,n)+QI_{DS,MEAS}(k,n)T_{MEAS}}{K_{DS}(n)N_{DS,DRAIN}}\right)\right\rceil\right), \text{ and}$$

$$N_{US,TAR}(k+1) = max\left(N_{US,MIN}, \max_n\left\lceil min\left(N_{US}(k), 1+\frac{QL_{US,MEAS}(k,n)+QI_{US,MEAS}(k,n)T_{MEAS}}{K_{US}(n)N_{US,DRAIN}}\right)\right\rceil\right)(9),$$

or as:

$$N_{DS,TAR}(k+1) = max\left(N_{DS,MIN}, \frac{1}{N_L}\sum_{n=1}^{N_L}\left\lceil min\left(N_{DS}(k), 1+\frac{QL_{DS,MEAS}(k,n)+QI_{DS,MEAS}(k,n)T_{MEAS}}{K_{DS}(n)N_{DS,DRAIN}}\right)\right\rceil\right), \text{ and}$$

$$N_{US,TAR}(k+1) = max\left(N_{US,MIN}, \frac{1}{N_L}\sum_{n=1}^{N_L}\left\lceil min\left(N_{US}(k), 1+\frac{QL_{US,MEAS}(k,n)+QI_{US,MEAS}(k,n)T_{MEAS}}{K_{US}(n)N_{US,DRAIN}}\right)\right\rceil\right)(10)$$

We can rewrite eq. (9) and (10) as a function of the queues egress rates by means of relation (6):

$$N_{DS,TAR}(k+1) = max\left(N_{DS,MIN}, \max_n\left\lceil min\left(N_{DS}(k), 1+\frac{2QL_{DS,MEAS}(k,n)-QL_{DS,MEAS}(k-1,n)+QE_{DS,MEAS}(k,n)T_{MEAS}}{K_{DS}(n)N_{DS,DRAIN}}\right)\right\rceil\right)$$

, and

$$N_{US,TAR}(k+1) = max\left(N_{US,MIN}, \max_n\left\lceil min\left(N_{US}(k), 1+\frac{2QL_{US,MEAS}(k,n)-QL_{US,MEAS}(k-1,n)+QE_{US,MEAS}(k,n)T_{MEAS}}{K_{US}(n)N_{US,DRAIN}}\right)\right\rceil\right)$$

(11),

or:

$$N_{DS,TAR}(k+1)=\max\left(N_{DS,MIN},\frac{1}{N_L}\sum_{n=1}^{N_L}\left[\min\left(N_{DS}(k),1+\frac{2\,QL_{DS,MEAS}(k,n)-QL_{DS,MEAS}(k-1,n)+QE_{DS,MEAS}(k,n)T_{MEAS}}{K_{DS}(n)N_{DS,DRAIN}}\right)\right]\right)$$

, and

$$N_{US,TAR}(k+1)=\max\left(N_{US,MIN},\frac{1}{N_L}\sum_{n=1}^{N_L}\left[\min\left(N_{US}(k),1+\frac{2\,QL_{US,MEAS}(k,n)-QL_{US,MEAS}(k-1,n)+QE_{US,MEAS}(k,n)T_{MEAS}}{K_{US}(n)N_{US,DRAIN}}\right)\right]\right)$$

(12).

Alternatively, one may consider a more general way of computing the value for the numbers $N_{DS,TAR}(k+1)$ and $N_{US,TAR}(k+1)$ as:

$$N_{DS,TAR}(k+1)=\max\left(N_{DS,MIN},g_{DS}\left(g_{DS,n}\left(QL_{DS,MEAS}(k,n),QI_{DS,MEAS}(k,n),QE_{DS,MEAS}(k,n)\right)\right)\right)$$

, and

$$N_{US,TAR}(k+1)=\max\left(N_{US,MIN},g_{US}\left(g_{US,n}\left(QL_{US,MEAS}(k,n),QI_{US,MEAS}(k,n),QE_{US,MEAS}(k,n)\right)\right)\right)$$

(13),

wherein $g_{DS,n}$ and $g_{US,n}$ are general mathematical functions determining the required numbers of downstream and upstream transmission slots per TDD frame necessary for draining the downstream and upstream transmit queues over respective subscriber line $L_n$, and $g_{DS}$ and $g_{US}$ are general mathematical functions across the subscriber lines of the so-determined required downstream and upstream numbers.

A benefit of queue-based measurements is that the traffic dynamics can be accounted for, and that traffic predictions are more accurate. For instance, if a queue ingress rate increases, then one can expect a higher traffic load over that subscriber line during the coming TDD frames.

Once the target numbers $N_{DS,TAR}$ and $N_{US,TAR}$ have been determined, the downstream and upstream margins are updated as follow:

$$N_{DS,MARGIN}(k+1) = N_{DS}(k) - N_{DS,TAR}(k+1), \text{ and}$$
$$N_{US,MARGIN}(k+1) = N_{US}(k) - N_{US,TAR}(k+1) \quad (14).$$

If $|N_{DS,MARGIN}(k+1) - N_{US,MARGIN}(k+1)| \geq N_T$, wherein $N_T$ denotes some difference margin threshold for triggering the DS/US ratio adaptation (typically $N_T = 2$ or more), then the DS/US ratio can be adapted as:

$$N_{DS}(k+1)=N_{DS,TAR}(k+1)+\text{round}\left(w_{DS}\left(N_{DS,MARGIN}(k+1)+N_{US,MARGIN}(k+1)\right)\right), \text{ and}$$
$$N_{US}(k+1)=N-N_{DS}(k+1)\,(15),$$

wherein $w_{DS}$ denote a positive weight between 0 and 1 designed to give more precedence to either downstream or upstream direction.

When $w_{DS} = \frac{1}{2}$ (i.e., no precedence to either downstream or upstream), then:

$$N_{DS}(k+1)=N_{DS,TAR}(k+1)+\text{round}\left(\frac{N_{DS,MARGIN}(k+1)+N_{US,MARGIN}(k+1)}{2}\right) \quad (16).$$

If $N_{DS,MARGIN}(k+1) = 0$ and $N_{US,MARGIN}(k+1) = 0$ (blocking situation), then the DS/US ratio is steered towards its default value, and adapted as:

$$N_{DS}(k+1)=\text{round}\left(\frac{N_{DS}(k)+N_{DS,DEF}}{2}\right), \text{ and}$$

$$N_{US}(k+1)=N-N_{DS}(k+1) \quad (17).$$

If $|N_{DS,MARGIN}(k+1) - N_{US,MARGIN}(k+1)| = 1$, then one may decide to leave the DS/US ratio unchanged, or to distribute that single transmission slot to downstream and upstream directions alternatively.

The target numbers $N_{DS,TAR}(k+1)$ and $N_{US,TAR}(k+1)$ do not need to be capped with the current $N_{DS}(k)$ and $N_{US}(k)$ values as per eq. (7) to (12). Yet, they should be at least capped by $N_{DS,MAX} = N - N_{US,MIN}$ and $N_{US,MAX} = N - N_{DS,MIN}$ values. The downstream and/or upstream margins as per eq. (14) can thus be negative, yet the adjustment of the DS/US ratio as per eq. (15) or (16) still yields good results. In such a case, the steering towards the default DS/US ratio as per eq. (17) is no longer relevant.

The so-adjusted numbers $N_{DS}(k+1)$ and $N_{US}(k+1)$ of downstream and upstream transmission slots per TDD frame are then passed to the DSPs 120 and respective CPEs for further enforcement over the subscriber lines. Typically, the new values will be enforced synchronously from a given TDD frame or superframe index onwards.

The on-line change of the DS/US ratio may bring about some transients in the traffic flows that might bias the traffic measurements. One can play with the parameter $\Delta i$ for discarding the corresponding measurement samples, or one can discard the measurement period during which the DS/US ratio has been changed.

Also, the adjustment and enforcement of the DS/US ratio does not necessarily occur at the end of each measurement period. Some further measurements periods can be considered before committing with a new DS/US ratio. The determination of the target numbers $N_{DS,TAR}$ and $N_{US,TAR}$ typically occurs at the end of each measurement period, yet if more than one measurement period is to be considered, then some average or maximum figures could be derived from these individual targets in order to decide for a DS/US ratio adaptation.

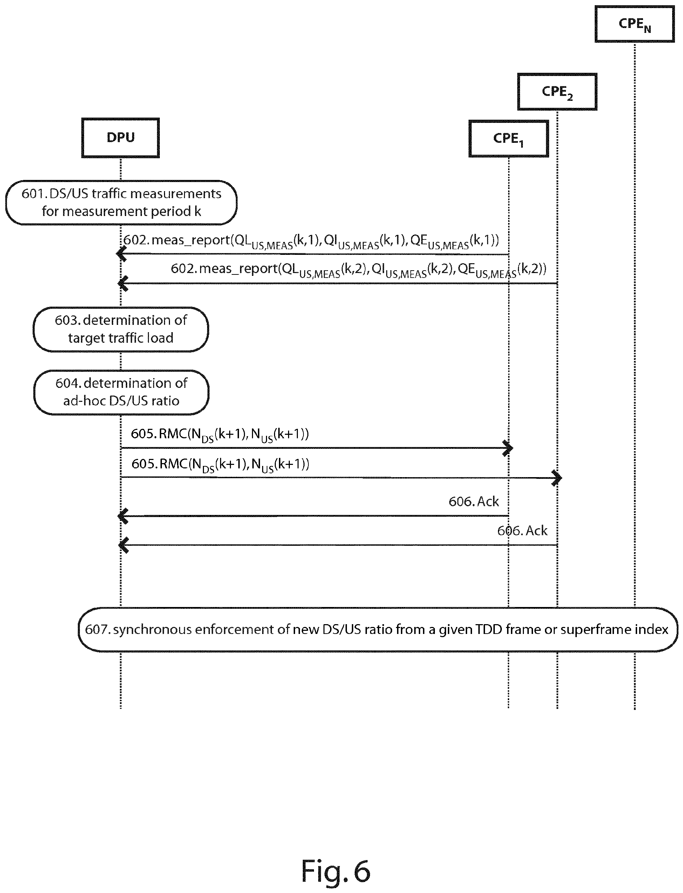

There is seen in fig. 6 a message flow chart between a DPU and respective $CPE_1$ to $CPE_N$ for on-line adaptation of the DS/US ratio.

At step 601, a new measurement round k is started, and downstream and upstream traffic measurements are carried out over the respective subscriber lines.

For PHY-based measurements, downstream and upstream traffic measurements are carried out by the DPU, and the CPEs $CPE_1$ to $CPE_N$ are not involved.

For queue-based measurements, the downstream traffic measurements are carried out by the DPU, whereas the upstream traffic measurements are carried out by the respective CPEs $CPE_1$ to $CPE_N$. The upstream traffic measurement samples are then reported at step 602 by the respective CPEs $CPE_1$ to $CPE_N$ to the DPU (see message "meas_report($QL_{US,MEAS}(k, n)$, $QI_{US,MEAS}(k,n)$, $QE_{US,MEAS}(k,n)$)" in fig. 6). The length of the measurement period, as well as the queue parameters that need to be measured and reported, are preliminary communicated by the DPU to the respective CPEs $CPE_1$ to $CPE_N$.

At step 603, the downstream and upstream target traffic load $N_{DS,TAR}(k+1)$ and $N_{US,TAR}(k+1)$ to be sustained over the subscriber lines during the coming period are determined by the DPU from the traffic measurements.

At step 604, a new ad-hoc DS/US ratio and corresponding values $N_{DS}(k+1)$ and $N_{US}(k+1)$ for the communication parameters $N_{DS}$ and Nus are determined by the DPU from the target traffic loads.

At step 605, the new values $N_{DS}(k+1)$ and $N_{US}(K+1)$ are sent to the respective CPEs $CPE_1$ to $C_{PEN}$ through the respective downstream RMC channels (see message "RMC($NS_{DS}(k+1)$, $N_{US}(k+1)$)" in fig. 6). The TDD frame or superframe index from which the new DS/US ratio shall be enforced can be communicated to the CPEs $CPE_1$ to $CPE_N$ along with the updated values $N_{DS(k+1)}$ and $N_{US}(K+1)$, or can be derived from the index of the logical frame during which the corresponding RMC command was received. With the latter option, the transmission timings of the respective RMC messages over the respective downstream RMC channels shall be closely controlled.

At step 606, the CPEs $CPE_1$ to $CPE_N$ acknowledge the good receipt of the new DS/US ratio. If a given CPE does not acknowledge the new DS/US ratio or sends a negative acknowledgment, then the corresponding subscriber line is to be re-initialized in order not to impair TDD communications over the other lines, as would be the case if the given CPE keeps on conforming to the old TDD frame structure.

At step 607, the new DS/US ratio is enforced by the DPU and the respective CPEs $CPE_1$ to $CPE_N$ at once from the same TDD or superframe index.

Then one re-iterates through the steps 601 to 607 for continuous adaptation of the DS/US ratio based on the actual traffic demands.

Although the present description primarily focuses on G.fast communication technology and related TDD frame structure, the present invention is applicable to other communication technologies.

For instance, future generation copper technologies, such as the fifth generation broadband technology XG-FAST, may enable full duplex transmission where a user may simultaneously transmit in downstream and in upstream.

In a single-user environment, full duplex removes the need to share resources between upstream and downstream. This is not the case in a multi-user environment: near-end crosstalk between customer premises equipment cannot be removed through signal processing such as vectoring. The upstream transmission resources of one user must therefore be traded off with downstream transmission resources towards other users.

The same communication controller can be used to allocate the available resources to either downstream or upstream in which a common duplexing frame structure is applied to all lines. The frame is divided into transmission slots that allow full downstream performance (with no or minimal upstream rate), and transmission slots that allow full upstream performance (with no or minimal downstream rate). Depending on the traffic measurements, the fraction of full DS versus full US can be adjusted as per the present invention.

In this context, the meaning of TDD shall be clarified and broadened. Often, TDD is interpreted as one direction transmitting at full power and the other at zero power, and alternating between the two. In a more general meaning, TDD employs one transmit direction at full power and the other transmit direction at reduced (nonzero) power, and alternate between the two. The reduced power ensures that a certain transmit direction is favored during some time slots. Also, one possible alternative would be to do full duplex in certain frequency range and TDD in other frequency range. Thus TDD is to be construed as a method of transmitting and receiving independent signals over a common signal path by means of synchronizing the frame structure at each end of the transmission line so that each signal is dominant on the line only a fraction of time in an alternating pattern.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. when provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

**Claims**

1. **A communication controller** (140) for controlling **Time-Division Duplexing TDD communications** over **a plurality of subscriber lines** ($L_1$ to $L_4$) making use of **a common TDD frame structure** (2), the common TDD frame structure comprising **a total number N** of transmission slots per TDD frame, **a first number $N_{DS}$** of which are configured for downstream communications over the subscriber lines and **a second number $N_{US}$** of which are configured for upstream communications over the subscriber lines,

   the communication controller being configured to receive **traffic measurements** performed over the respective subscriber lines, and to determine **a first target number $N_{DS,TAR}$** of downstream transmission slots per TDD frame and **a second target number $N_{US,TAR}$** of upstream transmission slots per TDD frame to be sustained over the subscriber lines during one or more TDD frames based on the traffic measurements,

   *wherein* the communication controller is further configured, if a difference or a weighted difference between **a downstream margin $N_{DS}$ - $N_{DS,TAR}$** and **an upstream margin $N_{US}$ - $N_{US,TAR}$** is greater than **a given threshold,** to adjust the first number $N_{DS}$ and the second number $N_{US}$ such that the difference or weighted difference between the downstream and upstream margins is reduced.

2. **A communication controller** (140) according to claim *1, wherein* the traffic measurements comprise **measured numbers** of downstream and upstream transmission slots per TDD frame previously used over the respective subscriber lines.

3. **A communication controller** (140) according to claim *2, wherein* the communication controller is further configured to determine respective maximum or time-averaged measured numbers of downstream and upstream transmission slots per TDD frame previously used over the respective subscriber lines, and to derive the first and second target numbers $N_{DS,TAR}$ and $N_{US,TAR}$ as absolute maximum value or averaged value across the subscriber lines of the so-determined maximum or time-averaged measured numbers.

4. **A communication controller** (140) according to claim *1, wherein* the traffic measurements comprise **measured characteristics** of respective **downstream and upstream transmit queues** (131) configured to buffer **downstream and upstream data units** pending for transmission over the respective subscriber lines.

5. **A communication controller** (140) according to claim *4, wherein* the measured characteristics comprise at least one of the following:

   - **measured lengths** of the respective downstream and upstream transmit queues;
   - **measured ingress rates** for the respective downstream and upstream transmit queues; and
   - **measured egress rates** for the respective downstream and upstream transmit queues.

6. **A communication controller** (140) according to claim 4 or 5, *wherein* the communication controller is further configured to determine respective required numbers of downstream and upstream transmission slots per TDD frame necessary for draining the downstream and upstream transmit queues over the respective subscriber lines during a given period, and to derive the first and second target numbers $N_{DS,TAR}$ and $N_{US,TAR}$ as absolute maximum value or averaged value across the subscriber lines of the so-determined required numbers.

7. **A communication controller** (140) according to claim *1, wherein* the communication controller is further configured, if both the downstream and upstream margins are equal to zero, to adjust the first number $N_{DS}$ and the second number Nus to **a first default number $N_{DS,DEF}$** and **a second default number $N_{US,DEF}$** respectively.

8. **A communication controller** (140) according to claim *1, wherein* the communication controller is further configured to repeatedly iterate through the steps of receiving, determining and adjusting as per claim 1.

9. **A communication controller** (140) according to claim 1, *wherein* the first number $N_{DS}$ and the second number Nus are enforced synchronously over the subscriber lines during showtime operation.

10. **An access node** (100) comprising **a communication controller** (140) according to any of claims 1 to 9.

11. **An access node** (100) according to claim 10, *wherein* the access node is **a Distribution Point Unit DPU** (100).

12. **A network manager** comprising **a communication controller** according to any of claims 1 to 9.

13. **A method** for controlling **Time-Division Duplexing TDD communications** over **a plurality of subscriber lines** ($L_1$ to $L_4$) making use of **a common TDD frame structure** (2), the common TDD frame structure comprising **a total number N** of transmission slots per TDD frame, **a first number $N_{DS}$** of which are configured for downstream communications over the subscriber lines and **a second number $N_{US}$** of which are configured for upstream communications over the subscriber lines,
the method comprising receiving **traffic measurements** performed over the respective subscriber lines, and determining **a first target number $N_{DS,TAR}$** of downstream transmission slots per TDD frame and **a second target number $N_{US,TAR}$** of upstream transmission slots per TDD frame to be sustained over the subscriber lines during one or more TDD frames based on the traffic measurements, *wherein* the method further comprises, if a difference or a weighted difference between **a downstream margin $N_{DS}$ - $N_{DS,TAR}$** and **an upstream margin $N_{US}$ - $N_{US,TAR}$** is greater than **a given threshold,** adjusting the first number $N_{DS}$ and the second number Nus such that the difference or weighted difference between the downstream and upstream margins is reduced.

**Patentansprüche**

1. **Kommunikationssteuerung** (140) zum Steuern einer **Zeitduplex** (TDD) **-Kommunikation** über **eine Vielzahl von Teilnehmerleitungen** ($L_1$ bis $_{L_4}$) , die eine **gemeinsame** TDD-**Rahmenstruktur** (2) nutzen, *wobei* die gemeinsame TDD-Rahmenstruktur **eine Gesamtzahl** N von Übertragungsschlitzen pro TDD-Rahmen umfasst, von denen **eine erste Anzahl** $N_{DS}$ für eine Stromabwärtskommunikation über die Teilnehmerleitungen ausgelegt sind und von denen **eine zweite Anzahl** $N_{US}$ für eine Stromaufwärtskommunikation über die Teilnehmerleitungen ausgelegt sind, *wobei* die Kommunikationssteuerung dazu ausgelegt ist, **Verkehrsmessungen,** die über die jeweiligen Teilnehmerleitungen durchgeführt werden, zu empfangen und **eine erste Zielanzahl** $N_{DS},T_{AR}$ von Stromabwärtsübertragungsschlitzen pro TDD-Rahmen und **eine zweite Zielanzahl** $N_{US,TAR}$ von Stromaufwärtsübertragungsschlitzen pro TDD-Rahmen, die über einen oder mehrere TDD-Rahmen über die Teilnehmerleitungen aufrechtzuerhalten sind, auf Basis der Verkehrsmessungen zu bestimmen, *wobei* die Kommunikationssteuerung ferner dazu ausgelegt ist, wenn eine Differenz oder eine gewichtete Differenz zwischen **einer stromabwärtigen Marge** $N_{DS}$ - $N_{DS,TAR}$ und **einer stromaufwärtigen Marge** $N_{US}$ - $N_{US,TAR}$ größer als **ein gegebener Schwellwert** ist, die erste Anzahl $N_{DS}$ und die zweite Anzahl $N_{US}$ derart anzupassen, dass die Differenz oder die gewichtete Differenz zwischen der stromabwärtigen und der stromaufwärtigen Marge reduziert wird.

2. **Kommunikationssteuerung** (140) nach Anspruch 1, *wobei* die Verkehrsmessungen **gemessene Anzahlen** von Stromabwärts- und Stromaufwärtsübertragungsschlitzen pro TDD-Rahmen, die zuvor über die jeweiligen Teilnehmerleitungen verwendet wurden, umfassen.

3. **Kommunikationssteuerung** (140) nach Anspruch 2, *wobei* die Kommunikationssteuerung ferner dazu ausgelegt ist, eine jeweilige maximale oder zeitgemittelte gemessene Anzahl von Stromabwärts- und Stromaufwärtsübertragungsschlitzen pro TDD-Rahmen, die zuvor über die jeweiligen Teilnehmerleitungen verwendet wurden, zu bestimmen und die erste und die zweite Zielanzahl $N_{DS,TAR}$ und $N_{US,TAR}$ als absoluten Maximalwert oder gemittelten Wert über die Teilnehmerleitungen der derart bestimmten maximalen oder zeitgemittelten gemessenen Anzahl abzuleiten.

4. **Kommunikationssteuerung** (140) nach Anspruch 1, *wobei* die Verkehrsmessungen **gemessene Charakteristiken** von jeweiligen **Stromabwärts- und Stromaufwärtsübertragungswarteschlangen** (131) umfassen, die dazu ausgelegt sind, **Stromabwärts- und Stromaufwärtsdateneinheiten,** die auf die Übertragung über die jeweiligen Teilnehmerleitungen warten, zu puffern.

5. **Kommunikationssteuerung** (140) nach Anspruch 4, *wobei* die gemessenen Charakteristiken mindestens eines von Folgendem umfassen:

   - **gemessene Länge** der jeweiligen Stromabwärts- und Stromaufwärtsübertragungswarteschlange;
   - **gemessene Eingangsrate** für die jeweilige Stromabwärts- und Stromaufwärtsübertragungswarteschlange und
   - **gemessene Ausgangsrate** für die jeweilige Stromabwärts- und Stromaufwärtsübertragungswarteschlange.

6. **Kommunikationssteuerung** (140) nach Anspruch 4 oder 5, *wobei* die Kommunikationssteuerung ferner dazu ausgelegt ist, eine jeweilige erforderliche Anzahl von Stromabwärts- und Stromaufwärtsübertragungsschlitzen pro TDD-Rahmen, die während einer gegebenen Periode zum Entleeren der Stromabwärts- und der Stromaufwärtsübertragungswarteschlange über die jeweiligen Teilnehmerleitungen benötigt werden, zu bestimmen und die erste und die zweite Zielanzahl $N_{DS,TAR}$ und $N_{US,TAR}$ als absoluten Maximalwert oder gemittelten Wert über die Teilnehmerleitungen der derart bestimmten erforderlichen Anzahl abzuleiten.

7. **Kommunikationssteuerung** (140) nach Anspruch 1, *wobei* die Kommunikationssteuerung ferner dazu ausgelegt ist, wenn sowohl die stromabwärtige als auch die stromaufwärtige Marge gleich null sind, die erste Anzahl $N_{DS}$ und die zweite Anzahl $N_{US}$ auf **eine erste Standardanzahl** $N_{DS,DEF}$ bzw. **eine zweite Standardanzahl** $N_{US,DEF}$ anzupassen.

8. **Kommunikationssteuerung** (140) nach Anspruch 1, *wobei* die Kommunikationssteuerung ferner dazu ausgelegt ist, die Schritte des Empfangens, des Bestimmens und des Anpassens gemäß Anspruch 1 wiederholt zu iterieren.

9. **Kommunikationssteuerung** (140) nach Anspruch 1, *wobei* die erste Anzahl $N_{DS}$ und die zweite Anzahl $N_{US}$ während des Darbietungsbetriebs synchron über die Teilnehmerleitungen erzwungen werden.

**10.** **Zugangsknoten** (100), der eine **Kommunikationssteuerung** (140) nach einem der Ansprüche 1 bis 9 umfasst.

**11.** **Zugangsknoten** (100) nach Anspruch 10, *wobei* der Zugangsknoten **eine Verteilungspunkteinheit $_{DPU}$** (100) ist.

**12.** **Netzwerkverwalter,** der eine **Kommunikationssteuerung** nach einem der Ansprüche 1 bis 9 umfasst.

**13.** **Verfahren** zum Steuern einer **Zeitduplex(TDD)-Kommunikation** über **eine Vielzahl von Teilnehmerleitungen** ($L_1$ bis $L_4$), die eine **gemeinsame TDD-Rahmenstruktur** (2) nutzen, *wobei* die gemeinsame TDD-Rahmenstruktur **eine Gesamtzahl N** von Übertragungsschlitzen pro TDD-Rahmen umfasst, von denen **eine erste Anzahl $N_{DS}$** für eine Stromabwärtskommunikation über die Teilnehmerleitungen ausgelegt sind und von denen **eine zweite Anzahl $N_{US}$** für eine Stromaufwärtskommunikation über die Teilnehmerleitungen ausgelegt sind, *wobei* das Verfahren das Empfangen von **Verkehrsmessungen,** die über die jeweiligen Teilnehmerleitungen durchgeführt werden, und das Bestimmen **einer ersten Zielanzahl $N_{DS,TAR}$** von Stromabwärtsübertragungsschlitzen pro TDD-Rahmen und **einer zweiten Zielanzahl $N_{US,TAR}$** von Stromaufwärtsübertragungsschlitzen pro TDD-Rahmen, die während eines oder mehrerer TDD-Rahmen aufrechtzuerhalten sind, auf Basis der Verkehrsmessungen umfasst, *wobei,* wenn eine Differenz oder eine gewichtete Differenz zwischen **einer stromabwärtigen Marge $N_{DS}$ - $N_{DS,TAR}$** und **einer stromaufwärtigen Marge $N_{US}$ - $N_{US,TAR}$** größer als **ein gegebener Schwellwert** ist, das Verfahren ferner das Anpassen der ersten Anzahl $N_{DS}$ und der zweiten Anzahl $N_{US}$ derart, dass die Differenz oder die gewichtete Differenz zwischen der stromabwärtigen und der stromaufwärtigen Marge reduziert wird, umfasst.

## Revendications

**1.** Contrôleur de communications (140) destiné à commander des communications avec duplexage par répartition en temps TDD sur une pluralité de lignes d'abonnés (L1 à L4) faisant usage d'une structure de trame TDD commune (2), la structure de trame TDD commune comprenant un nombre total N de créneaux d'émission par trame TDD, dont un premier nombre $N_{DS}$ est configuré pour des communications aval sur les lignes d'abonnés et dont un deuxième nombre $N_{US}$ est configuré pour des communications amont sur les lignes d'abonnés, le contrôleur de communications étant configuré pour recevoir des mesures de trafic effectuées sur les lignes d'abonnés respectives, et pour déterminer un premier nombre cible $N_{DS,TAR}$ de créneaux d'émission aval par trame TDD et un deuxième nombre cible $N_{US,TAR}$ de créneaux d'émission amont par trame TDD à entretenir sur les lignes d'abonnés pendant une ou plusieurs trames TDD d'après les mesures de trafic, le contrôleur de communications étant en outre configuré, si une différence ou une différence pondérée entre une marge aval $N_{DS}$ - $N_{DS,TAR}$ et une marge amont $N_{US}$ - $N_{US,TAR}$ est supérieure à un seuil donné, pour régler le premier nombre $N_{DS}$ et le deuxième nombre $N_{US}$ de telle façon que la différence ou la différence pondérée entre les marges aval et amont soit réduite.

**2.** Contrôleur de communications (140) selon la revendication 1, les mesures de trafic comprenant des nombres mesurés de créneaux d'émission aval et amont par trame TDD précédemment utilisés sur les lignes d'abonnés respectives.

**3.** Contrôleur de communications (140) selon la revendication 2, le contrôleur de communications étant en outre configuré pour déterminer des nombres mesurés respectifs maximaux ou moyennés en temps de créneaux d'émission aval et amont par trame TDD précédemment utilisés sur les lignes d'abonnés respectives, et pour déduire les premier et deuxième nombres cibles $N_{DS,TAR}$ et $N_{US,TAR}$ en tant que valeur maximale absolue ou valeur moyenne à travers les lignes d'abonnés des nombres mesurés maximaux ou moyennés en temps ainsi déterminés.

**4.** Contrôleur de communications (140) selon la revendication 1, les mesures de trafic comprenant des caractéristiques mesurées de files d'attente d'émission aval et amont (131) respectives configurées pour mettre en tampon des unités de données aval et amont en attente d'émission sur les lignes d'abonnés respectives.

**5.** Contrôleur de communications (140) selon la revendication 4, les caractéristiques mesurées comprenant au moins une des catégories suivantes :

- longueurs mesurées des files d'attente d'émission aval et amont respectives ;
- débits d'entrée mesurés pour les files d'attente d'émission aval et amont respectives ; et
- débits de sortie mesurés pour les files d'attente d'émission aval et amont respectives.

**EP 3 182 636 B1**

6. Contrôleur de communications (140) selon la revendication 4 ou 5, le contrôleur de communications étant en outre configuré pour déterminer des nombres requis respectifs de créneaux d'émission aval et amont par trame TDD nécessaires pour vider les files d'attente d'émission aval et amont sur les lignes d'abonnés respectives pendant une période donnée, et pour déduire les premier et deuxième nombres cibles $N_{DS,TAR}$ et $N_{US,TAR}$ en tant que valeur maximale absolue ou valeur moyenne à travers les lignes d'abonnés des nombres requis ainsi déterminés.

7. Contrôleur de communications (140) selon la revendication 1, le contrôleur de communications étant en outre configuré, si les marges aval et amont sont toutes deux égales à zéro, pour régler respectivement le premier nombre $N_{DS}$ et le deuxième nombre $N_{US}$ à un premier nombre par défaut $N_{DS,DEF}$ et un deuxième nombre par défaut $N_{US,DEF}$.

8. Contrôleur de communications (140) selon la revendication 1, le contrôleur de communications étant en outre configuré pour itérer de manière répétée à travers les étapes de réception, de détermination et de réglage selon la revendication 1.

9. Contrôleur de communications (140) selon la revendication 1, le premier nombre $N_{DS}$ et le deuxième nombre $N_{US}$ étant mis en application de manière synchrone sur les lignes d'abonnés pendant le fonctionnement en phase active.

10. Nœud d'accès (100) comprenant un Contrôleur de communications (140) selon l'une quelconque des revendications 1 à 9.

11. Nœud d'accès (100) selon la revendication 10, le nœud d'accès étant une unité de point de distribution DPU (100).

12. Gestionnaire de réseau comprenant un contrôleur de communications selon l'une quelconque des revendications 1 à 9.

13. Procédé de commande de communications avec duplexage par répartition en temps TDD sur une pluralité de lignes d'abonnés (L1 à L4) faisant usage d'une structure de trame TDD commune (2), la structure de trame TDD commune comprenant un nombre total N de créneaux d'émission par trame TDD, dont un premier nombre $N_{DS}$ est configuré pour des communications aval sur les lignes d'abonnés et dont un deuxième nombre $N_{US}$ est configuré pour des communications amont sur les lignes d'abonnés,
le procédé comprenant la réception de mesures de trafic effectuées sur les lignes d'abonnés respectives, et la détermination d'un premier nombre cible $N_{DS,TAR}$ de créneaux d'émission aval par trame TDD et d'un deuxième nombre cible $N_{US,TAR}$ de créneaux d'émission amont par trame TDD à entretenir sur les lignes d'abonnés pendant une ou plusieurs trames TDD d'après les mesures de trafic,
le procédé comprenant en outre, si une différence ou une différence pondérée entre une marge aval $N_{DS} - N_{DS,TAR}$ et une marge amont $N_{US} - N_{US,TAR}$ est supérieure à un seuil donné, le réglage du premier nombre $N_{DS}$ et du deuxième nombre $N_{US}$ de telle façon que la différence ou la différence pondérée entre les marges aval et amont soit réduite.

Fig. 1

Fig. 2

IWF

131

DSP

AFE

101

130

120

110

$QL_{US,MEAS}, QI_{US,MEAS}, QE_{US,MEAS}$

$N_D, N_{DS}, N_{US}$

$QL_{US,MEAS}, QI_{US,MEAS}, QE_{US,MEAS}$
$N_{DS,MEAS}, N_{US,MEAS}$

DRA

$N_D, N_{DS,DEF}, N_{US,DEF}$

$QL_{DS,MEAS}, QI_{DS,MEAS}, QE_{DS,MEAS}$

140

MIB

160

MGT

$N_D, N_{DS,DEF}, N_{US,DEF}$

102

150

100

$N_D, N_{DS,DEF}, N_{US,DEF}$

Fig. 3

Fig. 4A

Fig. 4B

queue-based measurement samples for measurement period k

$QL_{DS,MEAS}(k,n)$
$QI_{DS,MEAS}(k,n)$
$QE_{DS,MEAS}(k,n)$

$QL_{US,MEAS}(k,n)$
$QI_{US,MEAS}(k,n)$
$QE_{US,MEAS}(k,n)$

$QL_{DS,MEAS}(k+1,n)$
$QI_{DS,MEAS}(k+1,n)$
$QE_{DS,MEAS}(k+1,n)$

$QL_{US,MEAS}(k+1,n)$
$QI_{US,MEAS}(k+1,n)$
$QE_{US,MEAS}(k+1,n)$

$T_r$

$\Delta i$

measurement period k+1

measurement period $k = N_{MEAS} \times T_D$

TDD frame $= T_D$

$kN_{MEAS}$   $kN_{MEAS}+1$   $(k+1)N_{MEAS}-2$   $(k+1)N_{MEAS}-1$   $(k+1)N_{MEAS}$   $(k+1)N_{MEAS}+1$   $(k+2)N_{MEAS}-2$   $(k+2)N_{MEAS}-1$

$N_{DS,MEAS}(kN_{MEAS},n)$
$N_{US,MEAS}(kN_{MEAS},n)$

$N_{DS,MEAS}(kN_{MEAS}+1,n)$
$N_{US,MEAS}(kN_{MEAS}+1,n)$

$N_{DS,MEAS}((k+1)N_{MEAS}-1,n)$
$N_{US,MEAS}((k+1)N_{MEAS}-1,n)$

PHY-based measurement samples for measurement period k

time

Fig.5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014039004 A1

- US 20130272177 A1